# FASCICULE DE BREVET EUROPEEN

(11) **EP 2 030 824 B1**
(45) Date de publication et mention de la délivrance du brevet: **27.10.2010**
(21) Numéro de dépôt: 08305435.3
(22) Date de dépôt: 30.07.2008
(51) Int. Cl.: B60J 10/08, B60J 10/00

(54) **Ensemble d'étanchéité d'une porte avant d'un véhicule automobile et porte avant comportant un tel ensemble d'étanchéité**
Dichtungsanordnung für eine KFZ-Vordertür und KFZ-Tür mit solch einer Dichtungsanordnung
Seal assembly of an automobile front door and front door comprising such a seal assembly

(30) Priorité: 28.08.2007 FR 0757218
(43) Date de publication de la demande: 04.03.2009
(73) Titulaire: PEUGEOT CITROËN AUTOMOBILES S.A., 78140 Vélizy Villacoublay (FR)
(72) Inventeur: Simon, Guillaume, 66600 Rivesaltes (FR)

(56) Documents cités:
- EP-A- 1 293 372
- EP-A- 1 535 784
- US-A1- 2001 005 960

## Description

La présente invention est relative à un ensemble d'étanchéité entre un bas de porte avant, un bas de caisse et une aile avant d'un véhicule automobile, ainsi qu'à une porte avant de véhicule automobile équipée d'un tel ensemble d'étanchéité.

Les portes avant des véhicules automobiles comportent un ensemble d'étanchéité dont le rôle est d'assurer l'étanchéité entre la porte et les éléments adjacents de la carrosserie du véhicule et, plus particulièrement, entre le bas de caisse et l'aile avant.

Pour cela, l'ensemble d'étanchéité comprend un joint d'étanchéité bas de porte également appelé joint d'étanchéité bas de marche qui s'étend à la partie inférieure de la porte. Ce joint d'étanchéité comprend un tube en caoutchouc cellulaire et une semelle plus rigide en caoutchouc compact fixée sur la doublure de la porte par des organes appropriés, comme par exemple des organes d'encliquetage. Le joint d'étanchéité est monté en traction de façon à s'assurer que la semelle est toujours plaquée sur la doublure de la porte. Le joint d'étanchéité bas de porte permet d'éviter le passage des poussières et de filtrer les bruits de roulement du véhicule.

L'ensemble d'étanchéité comprend également un joint d'étanchéité d'aile s'étendant sensiblement verticalement sur le bord avant de la porte. Ce joint d'étanchéité d'aile comprend une semelle de fixation sur la doublure de porte et une lèvre destinée à l'étanchéité entre ledit bord avant et ladite aile.

Certains constructeurs de véhicules automobiles prévoient en plus de ces deux joints d'étanchéité, un troisième joint d'étanchéité nommé joint d'étanchéité avant de porte fixé sur le bas de la doublure de porte à l'avant du joint bas de porte.

La présence de ce joint permet d'empêcher l'air de pénétrer entre la porte avant et l'aile lors du déplacement du véhicule ce qui évite donc un bruit aérodynamique gênant.

Document EP 1 535 784 A1 divulgue un tel ensemble d'étanchéité.

On connaît un joint d'étanchéité avant de porte qui a la forme d'une équerre rigide sur laquelle vient s'encliqueter le joint bas de porte.

Mais ce type de montage présente un inconvénient qui réside principalement dans le fait que le tube du joint bas de porte est ouvert à sa partie avant si bien que l'air pénètre dans ce tube générant ainsi du bruit. De plus, de la poussière s'infiltre dans le tube et entre ce tube et le joint avant de porte.

L'invention a pour but de proposer un ensemble d'étanchéité entre un bas de porte avant, un bas de caisse et une aile avant de véhicule automobile qui évite ces inconvénients et qui est simple à mettre en oeuvre.

L'invention a donc pour objet un ensemble d'étanchéité entre un bas de porte avant, un bas de caisse et une aile avant d'un véhicule automobile, du type comprenant sur la porte :
- un joint d'étanchéité bas de porte entre le bas de porte et le bas de caisse et comprenant un tube et une semelle fixée sur ledit bas de porte,
- un joint d'étanchéité avant de porte entre l'avant de la porte et l'aile avant et fixé sur la porte à l'avant du joint d'étanchéité bas de porte, et
- un joint d'étanchéité sensiblement vertical fixé sur le bord avant de la porte et comprenant une semelle de fixation sur la porte et une lèvre destinée à l'étanchéité entre ledit bord avant et ladite aile,
caractérisé en ce que le joint d'étanchéité d'aile et le joint d'étanchéité avant de porte forment une pièce continue réalisée d'un seul tenant, le joint d'étanchéité avant de porte comprenant une partie d'emboîtement de l'extrémité avant du tube du joint d'étanchéité bas de porte.

Selon d'autres caractériritiques de l'invention:
- le tube est rendu solidaire du joint d'étanchéité d'aile par au moins un organe de fixation liant la semelle du joint d'étanchéité bas de porte à la semelle du joint d'étanchéité d'aile,
- la partie d'emboîtement de l'extrémité avant du tube comprend un manchon comportant une plaque en matériau rigide solidaire de la semelle du joint d'étanchéité d'aile et une voûte en arc de cercle et en matériau souple, déterminant un logement destiné à recevoir ladite extrémité avant du tube,
- la plaque en matériau rigide forme un support de l'extrémité avant du tube par ledit au moins organe de fixation,
- la voûte en matériau souple comporte un premier bord longitudinal solidaire de la plaque et un second bord longitudinal libre,
- le second bord longitudinal libre est déplaçable entre une position rabattue de recouvrement de l'extrémité avant du tube et une position relevée pour le positionnement de l'extrémité avant du tube et le montage dudit au moins organe de fixation,
- l'extrémité avant de la voûte est obturée, et
- ledit au moins organe de fixation comprend au moins un pion d'encliquetage.

L'invention a également pour objet une porte avant de véhicule automobile, caractérisée en ce qu'elle comprend un ensemble d'étanchéité tel que précédemment mentionné.

L'invention sera mieux comprise à la lecture de la description qui va suivre, donnée uniquement à titre d'exemple et faite en se référant aux dessins annexés, sur lesquels :
- la Fig. 1 est une vue schématique de face de la paroi interne d'une porte avant d'un véhicule automobile équipé d'un ensemble d'étanchéité, conforme à l'invention,
- la Fig. 2 est une vue schématique à plus grande échelle de la jonction entre un joint d'étanchéité bas de porte et un joint d'étanchéité avant de porte de l'ensemble d'étanchéité, conforme à l'invention, et
- les Figs. 3 et 4 sont des vues schématiques en coupe transversale de la jonction montrant le joint d'étanchéité avant de porte respectivement en position d'utilisation et en position de montage du joint d'étanchéité bas de porte.

Dans la description qui suit, les orientations utilisées sont les orientations habituelles d'un véhicule automobile et les termes "avant" et "arrière" s'entendent par rapport au sens de la marche normale du véhicule automobile

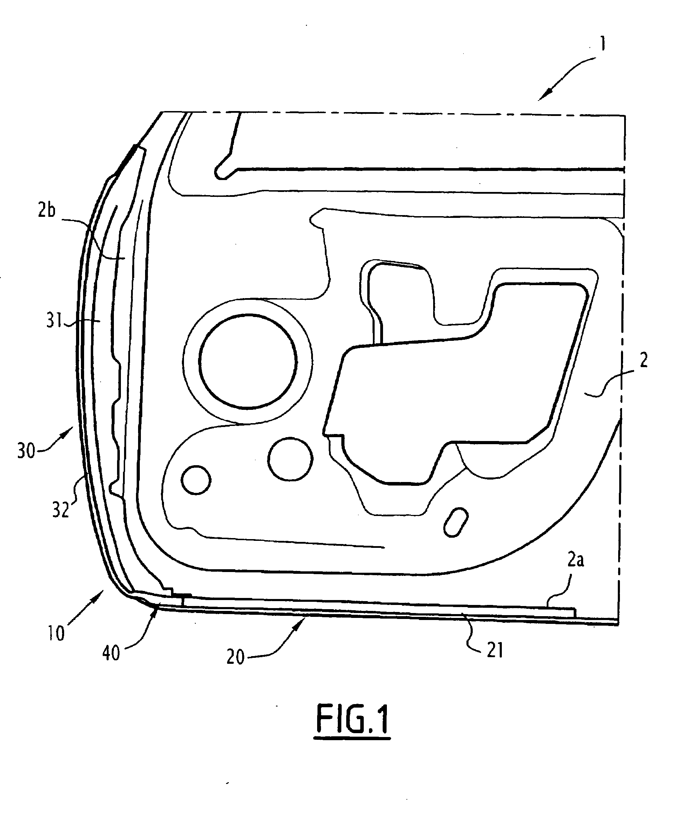

Sur la Fig. 1, on a représenté une partie d'une porte avant d'un véhicule automobile, désignée par la référence générale 1 et qui comporte une paroi interne ou doublure 2.

La porte 1 est équipée d'un ensemble d'étanchéité désigné dans son ensemble par la référence 10.

Cet ensemble 10 assure l'étanchéité entre un bas de porte avant, un bas de caisse et une aile avant du véhicule automobile.

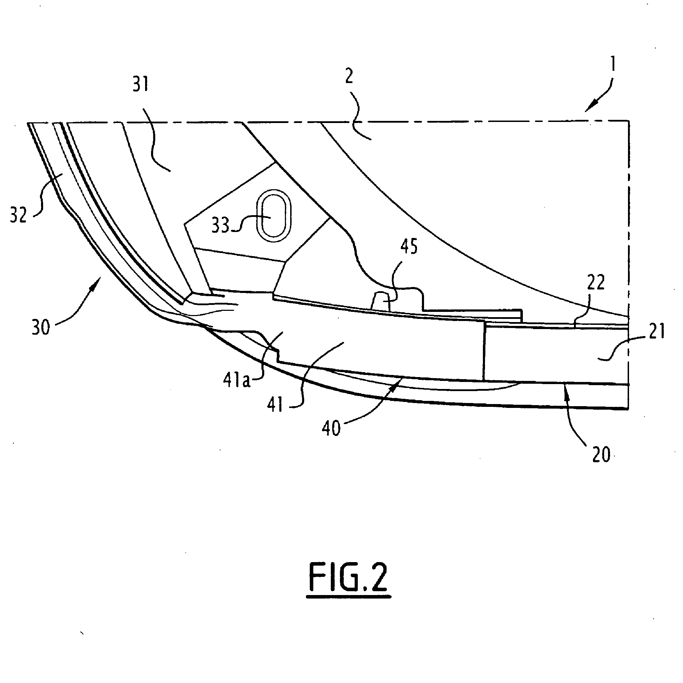

L'ensemble d'étanchéité 10 comprend un joint d'étanchéité 20 bas de porte entre le bas de porte 2a et le bas de caisse, non représenté. De manière classique, le joint d'étanchéité 20 bas de porte comprend un tube 21 (Fig. 2) en caoutchouc cellulaire et une semelle 22 plus rigide en caoutchouc compact. Le joint d'étanchéité 20 est fixé sur la doublure 2 par des organes appropriés de type connu, comme par exemple des organes d'encliquetage, non représentés, et il est monté sur cette doublure 2 en traction. Ce montage en traction permet à la semelle 22 du joint d'étanchéité 20 d'être toujours plaquée sur la doublure 2 de la porte 1.

L'ensemble d'étanchéité 10 comprend aussi un joint d'étanchéité 30 d'aile sensiblement vertical et fixé sur le bord avant 2b de la doublure 2 de la porte 1. De manière classique, le joint d'étanchéité 30 d'aile comprend une semelle 31 (Fig. 2) de fixation sur la doublure 2 de la porte 1 et une lèvre 32 destinée à l'étanchéité entre le bord avant 2b de la porte 1 et l'aile, non représentée. La semelle 31 est réalisée en une matière rigide pour la tenue sur la doublure et elle forme un support destiné à être fixé sur cette doublure 2 par des organes de fixation de type connu, comme par exemple des organes d'encliquetage 33. La semelle 31 et la lèvre 32 du joint d'étanchéité 30 d'aile sont réalisées par comoulage.

Enfin, l'ensemble d'étanchéité 10 comprend un joint d'étanchéité avant de porte désigné par la référence générale 40.

Ce joint d'étanchéité 40 avant de porte assure l'étanchéité entre l'avant de porte 1 et l'aile avant de façon à éviter que l'air n'entre entre la porte 1 et l'aile avant adjacente lors du déplacement du véhicule.

Le joint d'étanchéité 40 avant de porte et le joint d'étanchéité 30 d'aile sont venus de matière et forment une pièce continue.

Le joint d'étanchéité 40 avant de porte comprend une partie d'emboîtement de l'extrémité avant du tube 21 du joint d'étanchéité 20 de bas de porte et qui est formée par un manchon 41.

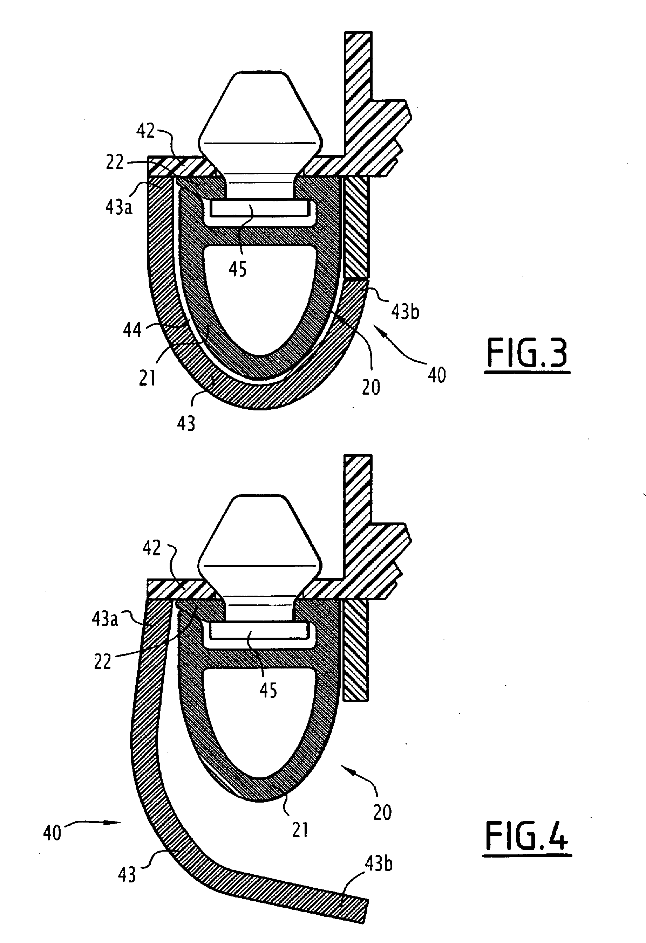

Comme montré plus particulièrement sur les Figs. 3 et 4, le manchon 41 du joint d'étanchéité 40 avant de porte comporte une plaque 42 en matériau rigide solidaire de la semelle 31 du joint d'étanchéité 30 avant de porte. Le manchon 41 comporte également une voûte 43 en arc de cercle et en matériau souple, déterminant un logement 44 destiné à recevoir l'extrémité avant du tube 21 du joint d'étanchéité 20 bas de porte.

Ainsi que représenté sur les Figs. 3 et 4, la plaque 42 en matériau rigide du joint d'étanchéité 40 avant de porte forme un support de l'extrémité avant du tube 21 au moyen d'au moins un organe de fixation 45 traversant la semelle 22 du joint d'étanchéité 20 bas de porte et la plaque 42 du joint d'étanchéité 40 avant de porte.

Ledit au moins organe de fixation est, de préférence, constitué par un pion d'encliquetage 45 ou par tout autre organe de fixation approprié.

L'extrémité avant 41 a du manchon 41 est obturée afin d'éviter que l'air et les poussières pénètrent dans le tube 21.

La voûte 43 en matériau souple du manchon 41 comporte un premier bord longitudinal 43a solidaire de la plaque 42 et un second bord longitudinal 43b libre.

Ainsi que montré sur les Figs. 3 et 4, le second bord longitudinal 43b est déplaçable entre une position rabattue (Fig. 3) de recouvrement de l'extrémité avant du tube 21 et une position relevée (Fig. 4) pour le positionnement de cette extrémité avant du tube 21 et le montage d'au moins un pion d'encliquetage 45.

Ainsi, lors de la jonction entre le joint d'étanchéité 20 bas de porte et le joint d'étanchéité 40 avant de porte, l'opérateur écarte le second bord longitudinal 43b de la voûte 43, comme montré à la Fig. 4, puis place l'extrémité avant du tube 21 à l'intérieur de la voûte 43 et solidarise la semelle 22 du joint d'étanchéité 20 avec la plaque 42 du joint d'étanchéité 40 au moyen d'au moins un pion d'encliquetage 45.

Le joint d'étanchéité 20 bas de porte, le joint d'étanchéité 30 d'aile et le joint d'étanchéité 40 avant de porte forment donc un ensemble continu et solidaire assurant l'étanchéité entre le bas de porte avant, le bas de caisse et l'aile avant du véhicule automobile.

De plus, le joint d'étanchéité 20 bas de marche est fixé sur toute sa longueur et est maintenu en traction ce qui permet de maintenir la semelle 22 du joint d'étanchéité 20 bas de porte plaquée contre la doublure de porte.

## Revendications

1. Ensemble d'étanchéité entre un bas de porte avant, un bas de caisse et une aile avant d'un véhicule automobile, du type comprenant sur la porte (1) :
- un joint d'étanchéité (20) bas de porte entre le bas de porte et le bas de caisse et comprenant un tube (21) et une semelle (22) destinée à être fixée sur ledit bas de porte,
- un joint d'étanchéité (40) avant de porte entre l'avant de porte et l'aile avant et destiné à être fixé sur le bas de porte à l'avant du joint d'étanchéité (20) bas de porte, et
- un joint d'étanchéité (30) d'aile sensiblement vertical destiné à être fixé sur le bord avant de la porte (1) et comprenant une semelle (31) de fixation sur la porte (1) et une lèvre (32) destinée à l'étanchéité entre ledit bord avant et ladite aile,
**caractérisé en ce que** le joint d'étanchéité (30) d'aile et le joint d'étanchéité (40) avant de porte forment une pièce continue réalisée d'un seul tenant, le joint d'étanchéité (40) avant de porte comprenant une partie (41) d'emboîtement de l'extrémité avant du tube (21) du joint d'étanchéité (20) bas de porte.

2. Ensemble d'étanchéité selon la revendication 1, **caractérisé en ce que** le tube (21) est rendu solidaire du joint d'étanchéité (30) d'aile par au moins un organe de fixation (45) liant la semelle (22) du joint d'étanchéité (20) bas de porte à la semelle (31) du joint d'étanchéité (30) d'aile.

3. Ensemble d'étanchéité selon la revendication 1 ou 2, **caractérisé en ce que** la partie d'emboîtement de l'extrémité avant du tube (21) comprend un manchon (41) comportant une plaque (42) en matériau rigide solidaire de la semelle (31) du joint d'étanchéité (30) d'aile et une voûte (43) en arc de cercle et en matériau souple, déterminant un logement (44) destiné à recevoir ladite extrémité avant du tube (21).

4. Ensemble d'étanchéité selon la revendication 3, **caractérisé en ce que** la plaque (42) en matériau rigide forme un support de l'extrémité avant du tube (21) par ledit au moins organe de fixation (45).

5. Ensemble d'étanchéité selon la revendication 3 ou 4, **caractérisé en ce que** la voûte (43) en matériau souple comporte un premier bord longitudinal (43a) solidaire de la plaque (42) et un second bord longitudinal (43b) libre.

6. Ensemble d'étanchéité selon la revendication 5, **caractérisé en ce que** le second bord longitudinal (43b) libre est déplaçable entre une position rabattue de recouvrement de l'extrémité avant du tube (21) et une position relevée pour le positionnement de l'extrémité avant dudit tube (21) et le montage dudit au moins organe de fixation (45).

7. Ensemble d'étanchéité selon l'une quelconque des revendications 2 à 6, **caractérisé en ce que** l'extrémité avant (41 a) du manchon (41) est obturée.

8. Ensemble d'étanchéité selon l'une quelconque des revendications 1 à 7, **caractérisé en ce que** le ledit au moins organe de fixation comprend au moins un pion d'encliquetage (45).

9. Porte avant de véhicule automobile, **caractérisée en ce qu'**elle comprend un ensemble d'étanchéité (10) selon l'une quelconque des revendications 1 à 8.

## Claims

1. Seal assembly between a motor vehicle front door bottom, body bottom and front wing, of the type including, on the door (1) :
- a door bottom seal (20) between the door bottom and the body bottom and including a tube (21) and a flange (22) intended to be fastened on said door bottom,
- a door front seal (40) between the door front and the front wing and intended to be fastened on the door bottom in front of the door bottom seal (20), and
- an approximately vertical wing seal (30) intended to be fastened on the front edge of the door (1) and including a flange (31) for fastening on the door (1) and a lip (32) intended for sealing between said front edge and said wing,
**characterized in that** the wing seal (30) and the door front seal (40) form a continuous integral piece, the door front seal (40) including an interlocking part (41) of the front end of the tube (21) of the door bottom seal (20).

2. Seal assembly according to Claim 1, **characterized in that** the tube (21) is secured to the wing seal (30) by at least one fastening member (45) connecting the flange (22) of the door bottom seal (20) to the flange (31) of the wing seal (30).

3. Seal assembly according to Claim 1 or 2, **characterized in that** the interlocking part of the front end of the tube (21) includes a sleeve (41) comprising a plate (42) of rigid material secured to the flange (31) of the wing seal (30) and a circularly arcuate arch (43) made of flexible material and determining a housing (44) intended to hold said front end of the tube (21).

4. Seal assembly according to Claim 3, **characterized in that** the plate (42) of rigid material forms a support for the front end of the tube (21) by said at least one fastening member (45).

5. Seal assembly according to Claim 3 or 4, **characterized in that** the arch (43) of flexible material comprises a first longitudinal edge (43a) secured to the plate (42) and a free second longitudinal edge (43b).

6. Seal assembly according to Claim 5, **characterized in that** the free second longitudinal edge (43b) can be moved between a flapped down position covering the front end of the tube (21) and a lifted position for positioning the front end of said tube (21) and mounting said at least one fastening member (45).

7. Seal assembly according to any one of Claims 2 to 6, **characterized in that** the front end (41a) of the sleeve (41) is closed off.

8. Seal assembly according to any one of Claims 1 to 7, **characterized in that** said at least one fastening member includes at least one clip-fastening pin (45).

9. Motor vehicle front door, **characterized in that** it includes a seal assembly (10) according to any one of Claims 1 to 8.

## Patentansprüche

1. Dichtungsanordnung zwischen einer Vordertür-Unterseite, einem Karosserieboden und einem vorderen Kotflügel eines Kraftfahrzeugs, von der Art, die an der Tür (1) enthält:
- eine Türunterseitendichtung (20) zwischen der Türunterseite und dem Karosserieboden, die einen Schlauch (21) und eine Grundplatte (22) aufweist, die dazu bestimmt ist, an der Türunterseite befestigt zu werden,
- eine vordere Türdichtung (40) zwischen der Vorderseite der Tür und dem vorderen Kotflügel und dazu bestimmt, an der Türunterseite vor der Türunterseitendichtung (20) befestigt zu werden, und
- eine im Wesentlichen senkrechte Kotflügeldichtung (30), die dazu bestimmt ist, am vorderen Rand der Tür (1) befestigt zu werden und eine Grundplatte (31) zur Befestigung an der Tür (1) und eine Lippe (32) enthält, die für die Dichtheit zwischen dem vorderen Rand und dem Kotflügel bestimmt ist,
**dadurch gekennzeichnet, dass** die Kotflügeldichtung (30) und die vordere Türdichtung (40) ein durchgehendes Bauteil bilden, das in einem Stück hergestellt wird, wobei die vordere Türdichtung (40) einen Bereich (41) zum Einfügen des vorderen Endes des Schlauchs (21) der Türunterseitendichtung (20) enthält.

2. Dichtungsanordnung nach Anspruch 1, **dadurch gekennzeichnet, dass** der Schlauch (21) durch mindestens ein Befestigungsorgan (45) fest mit der Kotflügeldichtung (30) verbunden wird, das die Grundplatte (22) der Türunterseitendichtung (20) mit der Grundplatte (31) der Kotflügeldichtung (30) verbindet.

3. Dichtungsanordnung nach Anspruch 1 oder 2, **dadurch gekennzeichnet, dass** der Einsteckbereich des vorderen Endes des Schlauchs (21) eine Muffe (41), die eine Platte (42) aus steifem Material aufweist, die fest mit der Grundplatte (31) der Kotflügeldichtung (30) verbunden ist, und eine kreisbogenförmige Wölbung (43) aus elastischem Material enthält, die einen Sitz (44) bestimmt, der das vordere Ende des Schlauchs (21) aufnehmen soll.

4. Dichtungsanordnung nach Anspruch 3, **dadurch gekennzeichnet, dass** die Platte (42) aus steifem Material einen Träger des vorderen Endes des Schlauchs (21) durch das mindestens eine Befestigungsorgan (45) bildet.

5. Dichtungsanordnung nach Anspruch 3 oder 4, **dadurch gekennzeichnet, dass** die Wölbung (43) aus elastischem Material einen ersten Längsrand (43a), der fest mit der Platte (42) verbunden ist, und einen zweiten freien Längsrand (43b) aufweist.

6. Dichtungsanordnung nach Anspruch 5, **dadurch gekennzeichnet, dass** der zweite freie Längsrand (43b) zwischen einer umgebogenen Stellung des Bedeckens des vorderen Endes des Schlauchs (21) und einer angehobenen Stellung zur Positionierung des vorderen Endes des Schlauchs (21) und die Montage des mindestens einen Befestigungsorgans (45) beweglich ist.

7. Dichtungsanordnung nach einem der Ansprüche 2 bis 6, **dadurch gekennzeichnet, dass** das vordere Ende (41a) der Muffe (41) verschlossen ist.

8. Dichtungsanordnung nach einem der Ansprüche 1 bis 7, **dadurch gekennzeichnet, dass** das mindestens eine Befestigungsorgan mindestens einen Einrastzapfen (45) enthält.

9. Vordertür eines Kraftfahrzeugs, **dadurch gekennzeichnet, dass** sie eine Dichtungsanordnung nach einem der Ansprüche 1 bis 8 enthält.
